# EUROPÄISCHE PATENTSCHRIFT

(11) **EP 3 224 570 B1**
(45) Veröffentlichungstag und Bekanntmachung des Hinweises auf die Patenterteilung: **08.01.2020**
(21) Anmeldenummer: 15812971.8
(22) Anmeldetag: 26.11.2015
(51) Int. Cl.: G01B 9/02, G01M 11/00, G03H 1/08, G02B 27/42

(54) **VERFAHREN UND VORRICHTUNG ZUR INTERFEROMETRISCHEN PRÜFUNG**
INTERFEROMETRIC TESTING METHOD AND DEVICE
PROCÉDÉ ET DISPOSITIF DE TEST INTERFÉROMÉTRIQUE

(30) Priorität: 28.11.2014 DE 102014117511
(43) Veröffentlichungstag der Anmeldung: 04.10.2017
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: BEIER, Matthias, 99423 Weimar (DE); STUMPF, Daniela, 07749 Jena (DE); GEBHARDT, Andreas, 99510 Apolda (DE); RISSE, Stefan, 07749 Jena (DE); ZEITNER, Uwe D., 99423 Weimar (DE)
(74) Vertreter: Epping - Hermann - Fischer
(86) Internationale Anmeldenummer: PCT/EP2015/077817
(87) Internationale Veröffentlichungsnummer: WO 2016/083528

(56) Entgegenhaltungen:
- DE-B3-102009 041 501
- US-A- 5 414 555
- SEBASTIAN SCHEIDING ET AL: "Freeform mirror fabrication and metrology using a high performance test CGH and advanced alignment features", MEDICAL IMAGING 2002: PACS AND INTEGRATED MEDICAL INFORMATION SYSTEMS: DESIGN AND EVALUATION, Bd. 8613, 5. März 2013 (2013-03-05), Seite 86130J, XP055254375, 1000 20th St. Bellingham WA 98225-6705 USA ISSN: 0277-786X, DOI: 10.1117/12.2001690 ISBN: 978-1-5106-0167-3
- JAMES H. BURGE ET AL: "Optical alignment with computer-generated holograms", MEDICAL IMAGING 2002: PACS AND INTEGRATED MEDICAL INFORMATION SYSTEMS: DESIGN AND EVALUATION, Bd. 6676, 11. September 2007 (2007-09-11), Seite 66760C, XP055254590, 1000 20th St. Bellingham WA 98225-6705 USA ISSN: 0277-786X, DOI: 10.1117/12.735853 ISBN: 978-1-5106-0167-3

## Beschreibung

Die Erfindung betrifft ein Verfahren und eine Vorrichtung zur interferometrischen Prüfung der Form und/oder Lage von mindestens zwei optischen Funktionsflächen in einem gemeinsamen optischen Prüfaufbau.

Diese Patentanmeldung beansprucht die Priorität der deutschen Patentanmeldung 10 2014 117 511. 5.

Hochqualitative optische Instrumente im Bereich der Erdbeobachtung, Astronomie, Lithographie und Präzisionsmesstechnik nutzen zunehmend optische Designs mit asphärisch oder freigeformten optischen Elementen. Die Erhöhung der Designvielfalt infolge der steigenden Anzahl an Freiheitsgraden bei der Verwendung asphärischer oder freigeformter Linsen- oder Spiegelgeometrien ermöglicht eine Verringerung der Baugröße der optischen Systeme bei gleichzeitigem Erhalt oder sogar einer Verbesserung der Abbildungsqualität.

Asphärische oder freigeformte Optiken stellen jedoch erhöhte Anforderungen hinsichtlich ihrer Herstellung, messtechnischen Charakterisierung und der Montage zu einem gemeinsamen optischen System. Einzelne optische Bauelemente müssen zur Realisierung der optischen Abbildung bei anspruchsvollen Systemen oftmals Oberflächenabweichungen kleiner als λ/10 oder sogar kleiner als λ/20 peak-to-valley (p.-v.) aufweisen. Gleichzeitig sind die einzelnen optischen Elemente mit Genauigkeiten im einstelligen Mikrometer-, respektive Winkelsekundenbereich, im Strahlengang des optischen Systems anzuordnen und zu justieren. Der Zusammenbau von optisch hochqualitativen Systemen mit asphärisch oder freigeformten Elementen ist daher mit einem erhöhtem Zeit- und Kostenaufwand verbunden.

Mit steigenden Anforderungen an die Qualität der optischen Einzelflächen hinsichtlich Formabweichung und Rauheit nehmen im Allgemeinen auch die Anforderungen an den Fertigungs- und Montageprozess zu. Dies betrifft insbesondere hochqualitativ abbildende Systeme für den ultravioletten bzw. sichtbaren Bereich des elektromagnetischen Spektrums. Zum Erreichen der geforderten Toleranzen der Einzelflächen kommen hier spezielle Formgebungs- und Glättprozesse, wie verschiedenste Sub-Apertur-Politurtechniken, zum Einsatz. Entsprechend dem zu bearbeitenden optischen Material kann dies z.B. die lokale Bearbeitung mittels Ionenstrahl oder magnetorheologischen Polierflüssigkeiten betreffen. Diese Prozesse entfernen lokal Material von der optischen Oberfläche basierend auf der vorherigen Ermittlung der Formabweichung über die zu korrigierende Apertur. Für den Korrekturprozess sind somit die messtechnische Erfassung der Formabweichung der optisch funktionsrelevanten Flächen mit möglichst hoher und gleichmäßiger Lateralauflösung, sowie die berührungslose Messung zur Vermeidung von Oberflächendefekten infolge des Messprozesses, von entscheidender Bedeutung.

Berührunglos messende Verfahren zur Formprüfung von optischen Einzelflächen mit geforderten Formabweichungen im Bereich < λ/10 (p.-v.) sind an sich bekannt und betreffen insbesondere Methoden der Interferometrie, optischer Profilometrie und Deflektometrie. Aufgrund der Möglichkeiten zur schnellen und hochpräzisen Prüfung der vollen Apertur, haben sich vor allem interferometrisch messende Prüfverfahren als Standardmessmethode durchgesetzt. In diesem Bereich ist vor allem die Fizeau-Interferometrie zu erwähnen, bei der die erreichbare Messunsicherheit vor allem von der Genauigkeit einer finalen Referenzfläche abhängig ist. Diese Referenzflächen sind meist hochgenaue Planflächen (Transmission Flat) oder sphärische Flächen (Transmission Sphere), welche eine Bestimmung der Formabweichung mit Messunsicherheiten < λ/20 (p.-v.) ermöglichen. Eine direkte Bestimmung der Formabweichung von optischen Bauteilen ist aufgrund der verwendeten Referenzflächen allerdings in der Regel auf plane und sphärische Prüflinge beschränkt. Für diese Geometrien existieren weiterhin spezielle Kalibrierverfahren, mit denen die Messunsicherheit auf wenige Nanometer Oberflächenabweichung reduziert werden kann.

Die Prüfung asphärischer oder freigeformter Oberflächen kann durch die alleinige Verwendung der vorhandenen Referenzflächen nur bedingt oder wie in den meisten Fällen gar nicht durchgeführt werden, da infolge der hohen Abweichung zur planen bzw. sphärischen Form hohe Streifendichten im Interferogramm entstehen, welche die verwendeten Detektoren nicht mehr erfassen können.

Zur Formprüfung von Asphären, Zylindern und Freiformen werden daher standardmäßig sog. Nulloptiken eingesetzt. Dies sind zusätzlich in den Strahlengang des optischen Prüfaufbaus eingebrachte Elemente, wie Linsen oder optische Gitter, welche die Messwellenfront an die spezifische Form des Prüflings anpassen und so eine interferometrische Auswertung ermöglichen. Die eingebrachten Nulloptiken müssen speziell für jede unterschiedliche Prüflingsgeometrie designt und gefertigt werden. Insbesondere computergenerierten Hologrammen (CGH - Computer Generated Hologram) als diffraktive Nulloptiken kommt in diesem Zusammenhang eine besondere Bedeutung zu. Sie ermöglichen eine hohe Designvielfalt und können durch moderne Methoden der Lithographie in hoher Präzision gefertigt werden.

Durch Einbringung eines CGH in den optischen Prüfaufbau werden jedoch auch Messfehler durch Abweichungen des CGH selbst bei der eigentlichen Formprüfung induziert. Die Fehler entstehen insbesondere durch Positionsungenauigkeiten der Elemente im Prüfaufbau und zum anderen durch Imperfektionen in der Herstellung des CGH.

Ein Prüfaufbau, bei dem ein CGH verwendet wird, ist aus der Druckschrift US 5 530 547 A bekannt. Bei der Ausrichtung des CGH im Prüfaufbau müssen sowohl die Relativposition zwischen Interferometer und CGH, als auch die Relativposition zwischen CGH und Prüfling, exakt eingestellt werden. Zur Ausrichtung des CGH zum Interferometer werden oftmals einfache Littrow-Anordnungen in beispielsweise ringförmiger Struktur verwendet, welche die vom Interferometer eintreffende Messwellenfront rückreflektieren und mit der Referenzwellenfront zur Interferenz bringen.

Die Komplexität der Ausrichtung der Prüflingsfläche zum CGH ist abhängig von der konkreten Prüflingsgeometrie und dem verwendeten Prüfaufbau. Rotationssymmetrisch asphärische Flächen oder entsprechende Off-Axis-Segmente einer rotationssymmetrischen Form beispielsweise können noch unter verschiedenen Azimuthalwinkeln des Prüflings geprüft werden, um zwischen Form- und Lagefehler zu unterscheiden. Die Prüfung von Freiformen ist durch das Fehlen der Rotationssymmetrie deutlich schwieriger. Aus diesem Grund werden gemäß dem Stand der Technik zur Justage der Relativposition zwischen CGH und Prüfling weitere Hilfshologramme gefertigt, welche die vom Interferometer eintreffende Messwellenfront in gezielter Weise formen. Die Wellenfronten stehen in Bezug zu weiteren Justiermarken, welche entweder monolithisch mit dem optischen Prüfling verbunden sind, oder sich an genau definierten Stellen im optischen Testaufbau befinden. Dies können z.B. plane oder sphärische Referenzflächen sein, welche die vom CGH eintreffende Messwellenfront rückreflektieren. Bei Verwendung von entsprechend hochwertigen Justiermarken mit geringer Formabweichung, können Positionsfehler in der Ausrichtung zwischen CGH und Prüfling < 1 µm, respektive < 10 Bogensekunden erreicht werden.

Imperfektionen des CGH selbst entstehen infolge der Unvollkommenheit des Herstellungsprozesses und betreffen u.a. Substratungenauigkeiten oder Abweichungen der gefertigten diffraktiven Mikrostrukturen in lateraler und axialer Richtung. Die Fehler führen zu Ungenauigkeiten der entstehenden Wellenfront und beeinträchtigen so das Messergebnis. Verschiedene Methoden zur Absolutkalibrierung existieren im Stand der Technik. So werden in den Druckschriften DE 198 20 785 A1, WO 2003 048 715 A1 und DE 10 2012 100 311 A1 spezielle Prüfaufbauten beschrieben, bei denen sog. Multiplex-CGHs zur Absolutkalibrierung verwendet werden. Die CGHs generieren neben der eigentlichen asphärischen Messwellenfront eine plane oder sphärische Kalibrierwellenfront, welche unter Nutzung eines bekannten Referenznormals zur Absolutkalibrierung des CGH verwendet werden kann. Dies ermöglicht eine absolute Ermittlung des Fehlers des CGH, wodurch die Präzision der Messung deutlich verbessert werden kann.

Während die Verwendung eines CGH eine große Designvielfalt hinsichtlich der Messung von Justiermarken oder Kalibriernormalen bietet, so beziehen sich die im Stand der Technik beschriebenen interferometrischen Prüftechniken stets auf die Prüfung von nur einer einzigen für das optische System funktionsrelevanten Fläche.

Eine weitere Prüfvorrichtung, die ein CGH verwendet, ist in "Freeform mirror fabrication and metrology using a high performance test CGH and advanced alignemnt features" von S. Scheiding et al. in Proc. of SPIE Vol.8613 (2013) zu finden. Weiterhin bekannt ist das taktile oder interferometrische Prüfen der Form und Lage zweier optischer Funktionsflächen aus der DE 10 2009 041 501 B3.

Eine zu lösende Aufgabe besteht somit darin, ein Verfahren und eine Vorrichtung zur interferometrischen Prüfung anzugeben, welche die gleichzeitige Prüfung von Form und/oder Lage von mindestens zwei optischen Funktionsflächen in einem gemeinsamen optischen Prüfaufbau ermöglichen.

Diese Aufgabe wird durch ein Verfahren und eine Vorrichtung gemäß den unabhängigen Patentansprüchen gelöst. Vorteilhafte Ausgestaltungen und Weiterbildungen der Erfindung sind Gegenstand der abhängigen Ansprüche.

Gemäß zumindest einer Ausgestaltung des Verfahrens zur gleichzeitigen interferometrischen Messung von Form und/oder Lage von mindestens zwei optischen Funktionsflächen wird ein interferometrischer Prüfaufbau verwendet, der ein Interferometer, ein strahlformendes optisches Element, das im Strahlengang zwischen dem Interferometer und den optischen Funktionsflächen angeordnet ist, und Justiermarken, welche sich auf definierten Positionen im interferometrischen Prüfaufbau oder definierten Positionen in Relation zu den optischen Funktionsflächen befinden, umfasst. Die Justiermarken sind vorzugsweise als Reflektoren, insbesondere als plane oder sphärische Spiegelflächen, ausgebildet. Die Justiermarken können zum Beispiel an einer Tragstruktur der optischen Funktionsflächen angeordnet sein und fungieren bei dem Verfahren vorteilhaft als Justierhilfen.

Durch das strahlformende optische Element werden bei dem Verfahren vorteilhaft mehrere Justierwellenfronten erzeugt, wobei die Justierwellenfronten an den Justiermarken und an den optischen Funktionsflächen transmittiert oder reflektiert werden und so Messwellenfronten erzeugt werden. Durch Auswertung der Messwellenfronten im Interferometer ermöglicht das Verfahren ein Vermessen der Lage der optischen Funktionsflächen in Bezug zueinander und in Bezug zu den Justiermarken. Nachfolgend können vorteilhaft Justierbewegungen zur Ausrichtung der optischen Funktionsflächen zu einer Sollposition durchgeführt werden. Die Schritte des Vermessens der Lage der optischen Funktionsflächen und der Durchführung von Justierbewegungen zur Ausrichtung der optischen Funktionsflächen können gegebenenfalls mehrfach wiederholt werden, bis sich die optischen Funktionsflächen in der Sollposition oder innerhalb eines vorgegebenen Toleranzbereichs um die Sollposition befinden.

Weiterhin werden bei dem Verfahren vorteilhaft mindestens zwei Prüfwellenfronten von dem strahlformenden optischen Element erzeugt, wobei die Prüfwellenfronten an den optischen Funktionsflächen transmittiert oder reflektiert werden und so weitere Messwellenfronten erzeugt werden. Durch Auswertung der weiteren Messwellenfronten im Interferometer können vorteilhaft Form- und/oder Lageabweichungen der optischen Funktionsflächen von einer Sollgeometrie oder Sollposition bestimmt werden.

Durch das Verfahren wird auf diese Weise eine gleichzeitige Prüfung der Form und/oder Lage mindestens zweier optischer Funktionsflächen erreicht. Insbesondere ermöglicht das Verfahren eine Überprüfung der Form und Lage beider optischen Funktionsflächen zueinander und zu den sich im Prüfaufbau befindlichen Justiermarken.

Unter einer "optischen Funktionsfläche" soll hier und im Folgenden eine in optischer Qualität gefertigte Oberfläche verstanden werden, welche für die Funktionsweise eines optischen Systems, wie beispielsweise eines Linsen- oder Spiegelteleskops, von Bedeutung ist. Insbesondere können die mindestens zwei optischen Funktionsflächen ein funktionsrelevanter Bestandteil eines optischen Systems mit mehreren optischen Flächen sein. Die optischen Funktionsflächen können insbesondere Linsen-, Gitter- oder Spiegelflächen sein, welche vorzugsweise auf einer gemeinsamen Tragstruktur gefertigt und/oder montiert werden. Die optischen Funktionsflächen sind zum Beispiel Spiegelflächen, an denen die Justierwellenfronten und Prüfwellenfronten bei der Durchführung des Verfahrens reflektiert werden. Mit besonderem Vorteil ist das Verfahren beispielsweise für die Form- und Lageprüfung von monolithisch verbundenen Spiegelflächen auf einer gemeinsamen Tragstruktur anwendbar. Das Verfahren und die Vorrichtung können weiterhin vorteilhaft für die Montage von mindestens zwei optischen Einzelbauelementen zu einer gemeinsamen Tragstruktur, oder einem optischen Einzelbauelement zu einem sich monolithisch auf einer Tragstruktur befindlichen Bauelement, genutzt werden.

Die optischen Funktionsflächen können jeweils zum Beispiel plan, sphärisch, asphärisch oder als Freiformfläche ausgebildet sein. Besonders vorteilhaft ist das Verfahren an optischen Funktionsflächen anwendbar, die ganz oder zumindest bereichsweise asphärisch oder als Freiformfläche ausgebildet sind. Durch Anwendung des Verfahrens können insbesondere Informationen zur nötigen Korrektur der Oberflächenform und/oder Position der optischen Funktionsflächen gewonnen werden, welche in nachfolgenden Formkorrektur- oder Montageprozessen Anwendung finden können.

Das in dem interferometrischen Prüfaufbau verwendete Interferometer umfasst eine Lichtquelle zur Erzeugung von kohärentem, vorzugsweise monochromatischem Licht, das in dem interferometrischen Prüfaufbau auf das strahlformende optische Element gerichtet ist. Beispielsweise kann das Interferometer einen Laser als Lichtquelle aufweisen. Das Interferometer kann insbesondere als Fizeau-Interferometer ausgeführt sein. Die aus dem Prüfaufbau in das Interferometer zurückreflektierten Messwellenfronten können in dem Interferometer beispielsweise durch Verwendung eines Strahlteilers mit einer Referenzwellenfront, die von einer optischen Referenzfläche im Interferometer erzeugt wird, zur Interferenz gebracht und beispielsweise unter Verwendung eines Bildverarbeitungssystems ausgewertet werden. Die Funktionsweise eines solchen Interferometers ist dem Fachmann an sich bekannt und wird deshalb hier nicht näher erläutert.

Das strahlformende optische Element ist vorzugsweise ein diffraktives optisches Element. Insbesondere kann das strahlformende optische Element ein Transmissions- oder Reflexionsgitter sein. Weiterhin ist es aber auch möglich, dass das strahlformende optische Element ein oder mehrere aktiv gesteuerte Elemente zur Strahlablenkung wie beispielsweise einen räumlichen Lichtmodulator (Spatial Light Modulator, SLM) oder eine refraktive Phasenplatte aufweist. Bei einer besonders bevorzugten Ausgestaltung ist das strahlformende optische Element ein computergeneriertes Hologramm. Das strahlformende optische Element weist mehrere Segmente auf, die zur Erzeugung der Justierwellenfronten und Prüfwellenfronten aus den Wellenfronten, welche von dem Interferometer ausgehen, vorgesehen sind. Die von dem Interferometer ausgehenden Wellenfronten können plan oder insbesondere sphärisch sein, wobei am Interferometer zum Beispiel eine sphärische Referenzfläche (Transmission Sphere) verwendet wird.

Das strahlformende optische Element weist mindestens zwei Prüfhologramme zur Erzeugung der Prüfwellenfronten und mehrere Justierhologramme zur Erzeugung der Justierwellenfronten auf. Die Prüfhologramme und/oder Justierhologramme können insbesondere jeweils Segmente eines als computergeneriertes Hologramm ausgeführten strahlformenden optischen Elements sein.

Gemäß einer weiteren vorteilhaften Ausgestaltung weist das strahlformende optische Element mindestens ein Kalibrierhologramm zur Erzeugung von Kalibrierwellenfronten auf. Mittels der durch das mindestens eine Kalibrierhologramm erzeugten Kalibrierwellenfront können vorteilhaft bekannte, vorzugsweise plane oder sphärische Referenznormale zur Kalibrierung des interferometrischen Prüfaufbaus vermessen werden. Auf diese Weise kann die Prüfung der optischen Funktionsflächen vorteilhaft als Absolutmessung mit vorteilhaft geringer Messunsicherheit durchgeführt werden.

Die mindestens zwei optischen Funktionsflächen sind bei einer bevorzugten Ausführungsform monolithisch auf einer gemeinsamen Tragstruktur angeordnet. Mit anderen Worten sind die optischen Funktionsflächen untrennbar mit der gemeinsamen Tragstruktur verbunden. Bei dem Verfahren können vorteilhaft die Lage der optischen Funktionsflächen zueinander und deren Form überprüft werden, um gegebenenfalls eine Justierung und/oder Formkorrektur vorzunehmen.

Bei einer weiteren Ausgestaltung ist eine erste der mindestens zwei optischen Funktionsflächen monolithisch mit einer gemeinsamen Tragstruktur verbunden. Bei dieser Ausgestaltung wird bei dem Verfahren vorzugsweise eine zweite, insbesondere einzeln gefertigte, optische Funktionsfläche relativ zu der ersten optischen Funktionsfläche justiert und auf der gemeinsamen Tragstruktur montiert.

Weiterhin kann vorgesehen sein, dass keine der mindestens zwei optischen Funktionsflächen monolithisch mit einer gemeinsamen Tragstruktur verbunden ist, wobei die optischen Funktionsflächen bei dem Verfahren relativ zueinander justiert und auf der gemeinsamen Tragstruktur montiert werden. Bei dieser Ausgestaltung sind beispielsweise beide optischen Funktionsflächen separat gefertigte Elemente, die unter Verwendung des Verfahrens relativ zueinander justiert auf der gemeinsamen Tragstruktur montiert werden.

Eine weitere Ausgestaltung kann die Lageprüfung und Montage von mindestens zwei separat gefertigten optischen Funktionsflächen zu beliebigen Montagestrukturen in einem optischen Prüfaufbau betreffen. Bei dieser Ausgestaltung können die optischen Funktionsflächen zum Beispiel durch geeignete Manipulationstechniken, wie beispielsweise Hexapoden, zu einer Sollposition ausgerichtet werden, wobei ein einziges strahlformendes optische Element zum Ausrichten beider optischer Funktionsflächen genutzt wird.

Eine zur Durchführung des Verfahrens geeignete Vorrichtung zur gleichzeitigen interferometrischen Prüfung der Form und/oder Lage von mindestens zwei optischen Funktionsflächen umfasst gemäß einer Ausgestaltung einen interferometrischen Prüfaufbau, der ein Interferometer und ein strahlformendes optisches Element, das im Strahlengang zwischen dem Interferometer und den optischen Funktionsflächen angeordnet ist, aufweist. Das strahlformende optische Element ist vorteilhaft zur Erzeugung von mehreren Prüfwellenfronten und zur Erzeugung von mehreren Justierwellenfronten geeignet. Weiterhin enthält die Vorrichtung vorteilhaft Justiermarken, welche sich auf definierten Positionen im interferometrischen Prüfaufbau oder definierten Positionen in Relation zu den optischen Funktionsflächen befinden.

Weitere vorteilhafte Ausführungen der Vorrichtung ergeben sich aus der vorherigen Beschreibung des Verfahrens und den nachfolgend beschriebenen Ausführungsbeispielen.

Das Verfahren und die Vorrichtung zur interferometrischen Prüfung werden im Folgenden anhand von Ausführungsbeispielen im Zusammenhang mit den Figuren 1 bis 8 näher erläutert.

Es zeigen:
Fig. 1 ein beispielhaftes computergeneriertes Hologramm (CGH), das bei einem Ausführungsbeispiel des Verfahrens als strahlformendes Element verwendbar ist,
Fig. 2 ein Ausführungsbeispiel einer Vorrichtung zur interferometrischen Prüfung in einer Seitenansicht zur Messung von Form und Lage eines monolithisch gefertigten Spiegelmoduls unter Verwendung von Referenzstrukturen, umfassend ein CGH entsprechend Fig. 1,
Fig. 3 den bereits in Fig. 2 dargestellten Prüfaufbau in isometrischer Darstellung zur weiteren Erläuterung eines Ausführungsbeispiels des erfindungsgemäßen Verfahrens,
Fig. 4 ein mit der Vorrichtung gemäß Fig. 2 und Fig. 3 beispielhaft gemessenes Interferenzstreifenmuster zur Erläuterung der optischen Funktion des computergenerierten Hologramms,
Fig. 5a und Fig. 5b ein weiteres Ausführungsbeispiel einer Vorrichtung zur interferometrischen Prüfung zur Montage eines gefertigten Einzelspiegels zu einem sich monolithisch auf einer Tragstruktur befindlichen weiteren Spiegels unter interferometrischer Kontrolle und der Nutzung weiterer Referenzstrukturen,
Fig. 6a und Fig. 6b ein weiteres Ausführungsbeispiel einer Vorrichtung zur interferometrischen Prüfung zur Montage zweier gefertigter Einzelspiegel zu einer gemeinsamen Tragstruktur,
Fig. 7 ein Beispiel eines computergenerierten Hologramms, welches neben der Prüfwellenfront eine weitere, vorzugsweise plane oder sphärische Kalibrierwellenfront generiert, wodurch eine Absolutkalibrierung beider Prüfhologramme ermöglicht wird, und
Fig. 8a und Fig. 8b ein Ausführungsbeispiel eines möglichen Aufbaus zur Absolutkalibrierung des in Fig. 7 dargestellten Hologramms unter Nutzung sphärischer Referenznormale.

Gleiche oder gleich wirkende Bestandteile sind in den Figuren jeweils mit den gleichen Bezugszeichen versehen. Die dargestellten Bestandteile sowie die Größenverhältnisse der Bestandteile untereinander sind nicht als maßstabsgerecht anzusehen.

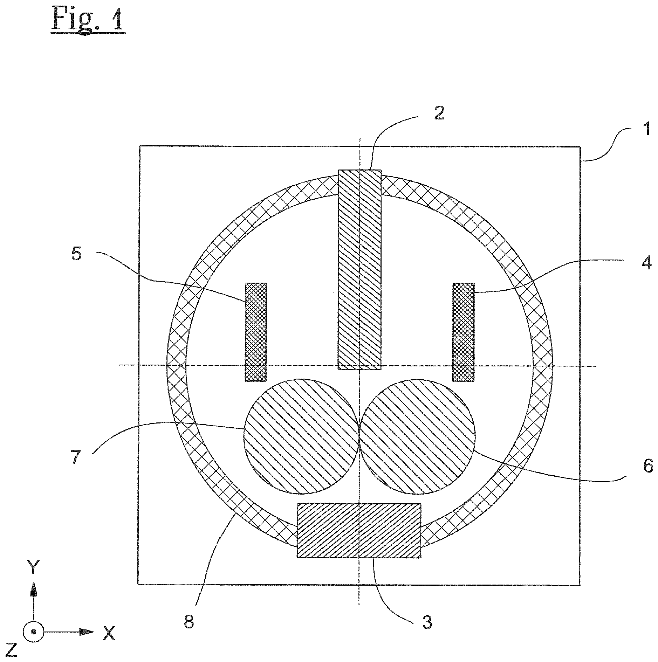

Bei dem Verfahren und der Vorrichtung zur simultanen Prüfung von Form und/oder Lage mindestens zweier optischer funktionsrelevanter Flächen wird vorzugsweise ein einzelnes, insbesondere diffraktives optisches Element als strahlformendes optisches Element 1 genutzt, wie es beispielhaft in Fig. 1 dargestellt ist. Es sei bemerkt, dass sich alle folgenden Beispiele auf die Verwendung eines diffraktiven Beugungsgitters, insbesondere eines computergenerierten Hologramms (CGH), als strahlformendes optisches Element 1 beziehen. Das Verfahren ist jedoch auch unter Verwendung von anderen passiven oder aktiv geregelten strahlformenden optischen Elementen, wie einer refraktiven Phasenplatte oder eines räumlichen Lichtmodulators (Spatial Light Modulator), anwendbar.

Bei Verwendung eines diffraktiven Beugungsgitters in Form eines CGHs wird das CGH 1 typischerweise durch Lithographieprozesse als Transmissions- oder Reflexionsgitter auf einem dafür geeigneten Substrat gefertigt. Das in Fig. 1 dargestellte transmissiv wirkende CGH 1 nutzt zur interferometrischen Prüfung zwei Prüfhologramme 2 und 3, welche diffraktiv wirkende Mikrostrukturen aufweisen, die die von einem Interferometer eintreffende Wellenfront entsprechend der Geometrie der zu prüfenden optischen Funktionsflächen anpasst. Neben den für die Form- und Lageprüfung relevanten Prüfhologrammen 2 und 3, besitzt das beispielhafte CGH 1 Justierhologramme 4, 5, 6 und 7, bei denen es sich ebenfalls um diffraktiv wirkende Mikrostrukturen handelt.

Die Justierhologramme 4 und 5 überführen die eintreffende Wellenfront zum Beispiel in eine plane Wellenfront zur Prüfung zweier sich im Prüfaufbau befindlichen Planflächen, die als Justiermarken fungieren. Entsprechend des gemessenen Interferenzstreifenmusters kann durch die Justierhologramme 4 und 5 so eine Verkippung der angemessenen Planflächen gegenüber dem CGH 1 um die Koordinatenachsen X und Y ermittelt werden. Die weiteren Justierhologramme 6 und 7 überführen die eintreffende Wellenfront zum Beispiel in zwei konvergierende sphärische Wellenfronten, welche die Lage zweier als Justiermarken fungierenden sphärischen Retroreflektoren im interferometrischen Prüfaufbau überprüfen. Eine Abweichung der sphärischen Retroreflektoren von ihrer Solllage führt zu einem Interferenzstreifenmuster in den beiden Justierhologrammen 6 und 7, wodurch eine Überprüfung der Verschiebungen und Verkippungen zwischen CGH 1 und den sphärischen Justiermarken in allen sechs Freiheitsgraden möglich ist. Eine weitere Hologrammstruktur auf dem in Fig. 1 beispielhaft dargestellten CGH 1 ist ein als Ring ausgebildeter Retroreflektor 8, welcher zur Justierung des CGH 1 zum Interferometer dient. Die einfallende Wellenfront wird beispielsweise in einer Littrow-Anordnung in sich rückreflektiert und zur Justierung des CGH 1 genutzt.

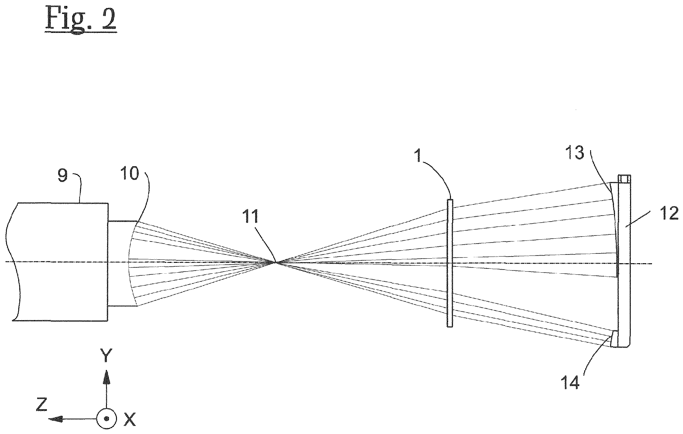

Fig. 2 zeigt ein Ausführungsbeispiel des interferometrischen Prüfaufbaus in Seitenansicht, umfassend ein Fizeau-Interferometer 9 mit einer Transmission Sphere 10 als finale Referenzfläche, ein CGH 1 entsprechend Fig. 1 und zwei monolithisch auf einer gemeinsamen Tragstruktur 12 gefertigten optischen Funktionsflächen 13 und 14, die bei dem hier dargestellten Ausführungsbeispiel Spiegelflächen sind. Die von der Transmission Sphere 10 des Interferometers ausgehende Kugelwelle konvergiert zunächst bis zu einem Fokuspunkt 11 und divergiert dann weiter in sphärischer Form bis zum CGH 1, an dem die Welle an den darin enthaltenen Prüfhologrammen 2, 3 gebeugt und vorzugsweise so in ihrer Form verändert wird, dass sie senkrecht auf die zu messenden optischen Funktionsflächen 13, 14 trifft.

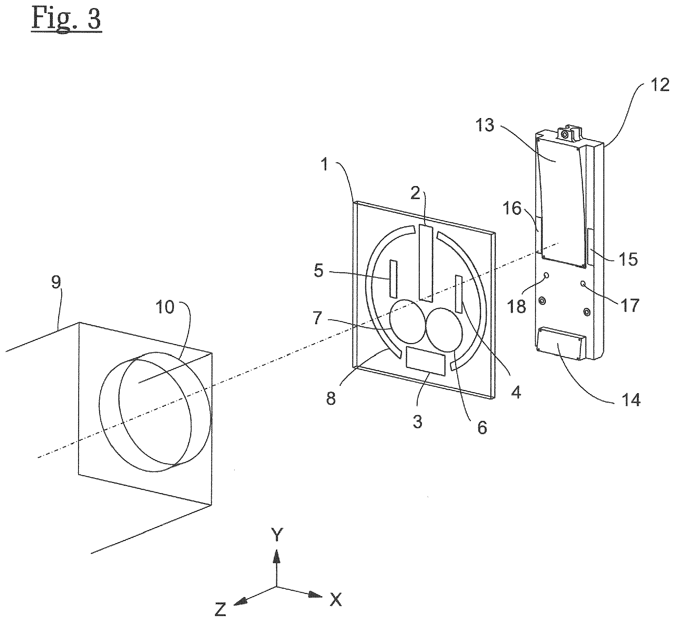

Fig. 3 zeigt den Prüfaufbau gemäß dem Ausführungsbeispiel der Fig. 2 in isometrischer Darstellung zur verbesserten Anschaulichkeit. Das beispielhafte Fizeau-Interferometer 9 nutzt eine Transmission Sphere 10 zur Generierung einer sphärischen Messwellenfront. Das CGH 1 enthält verschiedene Prüfholgramme 2, 3 und Justierhologramme 4, 5, 6, 7. Ein Spiegelmodul wird durch eine Tragstruktur 12 mit zwei monolithisch darauf angeordneten optischen Funktionsflächen 13, 14, bei denen es sich um Spiegelflächen handelt, gebildet. Die optischen Funktionsflächen 13, 14 befinden sich zusammen mit Justiermarken 15, 16, 17 und 18 auf der gemeinsamen Tragstruktur 12. Im Einzelnen handelt es sich bei den Justiermarken 15, 16 um zwei in optischer Qualität gefertigte Planflächen, welche eine Reflektion des einfallenden Lichts ermöglichen und bei den Justiermarken 17, 18 um zwei sphärische Kugelkalotten, welche als Retroreflektoren wirken.

Die interferometrische Form- und Lageprüfung erfolgt üblicherweise in der ersten positiven oder negativen Beugungsordnung des CGH, eine Prüfung in einer anderen Beugungsordnung ist aber auch möglich. Zur Ausrichtung des Spiegelmoduls muss dieses üblicherweise in allen sechs Freiheitsgraden zum CGH 1 ausgerichtet werden. Dies erfolgt beispielsweise durch die in dem CGH enthaltenen Justierhologramme 4, 5, 6, 7, insbesondere mittels der beobachteten Interferenzstreifenmuster. Dabei überführen die Justierhologramme 4 und 5 die eintreffende sphärische Wellenfront in eine austretende plane Wellenfront, welche an den planen Referenzflächen der Justiermarken 15, 16 reflektiert wird. Die Auswertung des Interferogramms ermöglicht eine exakte Justierung des Spiegelmoduls in den Rotationen um die X- und Y-Koordinatenachsen zum CGH 1.

Weiterhin überführen die Justierhologramme 6, 7 die eintreffende divergierende sphärische Wellenfront in zwei austretende sphärisch konvergierende Wellenfronten, welche ihren Fokus im Krümmungsmittelpunkt der als konkave Justiersphären ausgebildeten Justiermarken 17, 18 haben. Die Wellenfronten werden an den Justiermarken 17, 18 reflektiert und das entstehende Interferenzstreifenmuster am Interferometer 9 ausgewertet. Anhand des Interferogramms kann das Spiegelmodul so in allen sechs Freiheitsgraden gegenüber dem CGH 1 einjustiert werden. Unterschiedliche Justierhologramme respektive Justiermarken haben im Allgemeinen unterschiedliche Empfindlichkeiten gegenüber verschiedenen Lageabweichungen zwischen dem CGH und dem Prüfling. Entsprechend der Designmöglichkeiten des CGH ist somit eine Vielzahl verschiedener optischer Justiermarken denkbar. Die Justiermarken müssen des Weiteren auch nicht monolithisch mit der Tragstruktur 12 des Prüflings verbunden sein, sondern können sich ebenso an definierten Positionen innerhalb des interferometrischen Prüfaufbaus befinden. Die Anordnung der Justiermarken 15, 16, 17, 18 auf der gemeinsamen Tragstruktur 12 der optischen Funktionsflächen ist jedoch besonders von Vorteil, da die kombinierte Fertigung der optisch relevanten Funktionsflächen 13, 14 zusammen mit den Justiermarken 15, 16, 17, 18 in nur einer einzigen Maschinenaufspannung einen exakten Lagebezug nach der Herstellung garantiert.

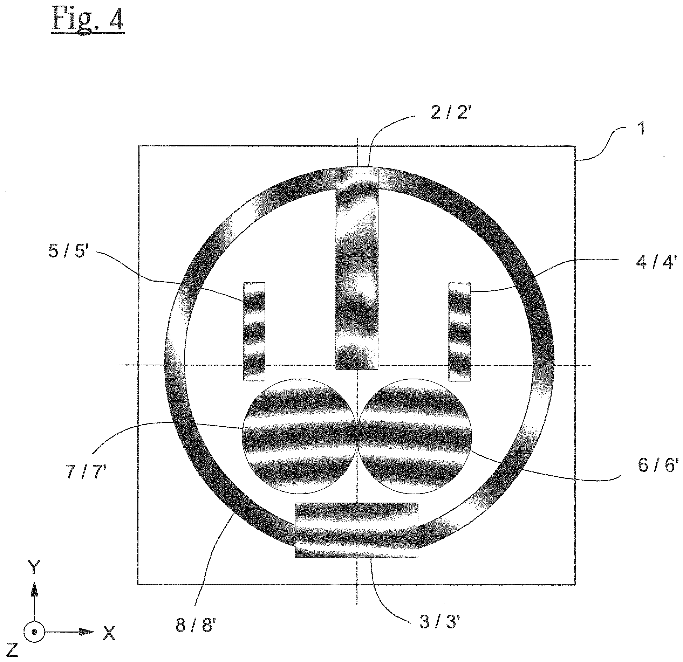

Fig. 4 zeigt ein mögliches unter Verwendung des CGH 1 und des Prüfaufbaus aus den vorherigen Figuren 2 und 3 gemessenes Interferogramm. Das gemessene Interferenzstreifenmuster 8' am Retroreflektor-Ring 8 zeigt aufgrund einer Verschiebung in X- und Y-Richtung zwischen CGH 1 und Transmission Sphere 10 Anteile von geradlinig unter 45° verlaufenden Interferenzstreifen und zusätzlich einen rotationssymmetrischen Anteil aufgrund einer verbleibenden Dejustierung in Z. Die in den Justierhologrammen 4 und 5 gemessenen Interferenzstreifenmuster 4', 5' zeigen vor allem Anteile einer Kippung des Spiegelmoduls gegenüber dem CGH 1 um die X-Achse und zusätzlich eine minimale Verschiebung in Z-Richtung. Die gleichen Anteile der Dejustierung können mit unterschiedlicher Sensitivität in den Justierhologrammen 6 und 7 als Interferenzstreifenmuster 6', 7' beobachtet werden.

Die Prüfhologramme 2 und 3 zeigen die gemessene Formabweichung 2', 3' der beiden optischen Funktionsflächen 13, 14 mit der verbleibenden Dejustierung, welche bereits in den Justierhologrammen 4, 5, 6 und 7 sichtbar ist. Entsprechend der erreichten Formgenauigkeit der verwendeten Justiermarken 15, 16, 17, 18 werden die Interferenzstreifenmuster 4', 5', 6', 7' in den Justierhologrammen 4, 5, 6, 7 noch von den gemessenen Streifen infolge der Formabweichungen der Justiermarken 15, 16, 17, 18 überlagert.

Im Einzelnen kann eine interferometrische Form- und Lageprüfung entsprechend einem Ausführungsbeispiel des Verfahrens beispielhaft anhand Fig. 3 und Fig. 4 wie folgt ablaufen:
- Einrichten des Interferometers 9 und der Transmission Sphere 10.
- Ungefähres Einrichten des CGH 1 und des Prüflings 12 durch geeignete mechanische Verstelleinrichtungen (nicht explizit dargestellt). Die Positionen sind aus dem optischen Design des Prüfaufbaus hinreichend genau bekannt.
- Justierung der Relativposition zwischen CGH 1 und Transmission Sphere 10 anhand des im Justierhologramm 8 gemessenen Interferenzstreifenmusters 8'. Das Justierhologramm 8 reflektiert die eintretende sphärische Wellenfront in sich selbst und erzeugt am Interferometer 9 ein Interferenzstreifenmuster 8', welches zur Justierung des CGH 1 durch entsprechende Feinjustierungsmöglichkeiten in den Translationen in X, Y, Z bzw. den Rotationen um X und Y genutzt wird. Das CGH 1 ist zum Interferometer ausgerichtet, wenn die Anzahl der Interferenzstreifen minimal ist. Nach der Einrichtung ist das CGH 1 zum Interferometer 9 bzw. der Transmission Sphere 10 ausgerichtet.
- Justierung der Kippung des Prüflings 12 gegenüber den Koordinatenachsen X und Y unter Beobachtung des Interferenzstreifenbildes 4', 5' in der Justierhologrammen 4, 5. Der Prüfling 12 ist justiert, wenn die Anzahl der gemessenen Interferenzstreifen 4', 5' minimal wird bzw. nur noch der Formfehler der verwendeten planen Justierflächen 15, 16 als Interferogramm sichtbar wird.
- Justierung der verbleibenden Positionsabweichungen (Lateralversatz in X, Y, Z, Rotation um Z) zwischen Prüfling und CGH 1 durch Beobachtung der Interferenzstreifenmuster 6', 7' in den Justierhologrammen 6, 7. Der Prüfling ist wiederum justiert, wenn die Anzahl der gemessenen Interferenzstreifen 6', 7' minimal wird, bzw. nur noch der Formfehler der sphärischen Justiermarken 17, 18 als Interferogramm sichtbar wird.
- Bestimmung des Formfehlers der ersten optischen Funktionsfläche 13 durch interferometrische Auswertung des Interferogramms 2', gemessen im Prüfhologramm 2.
- Bestimmung des Formfehlers der zweiten optischen Funktionsfläche 14 durch interferometrische Auswertung des Interferogramms 3', gemessen im Prüfhologramm 3.

Die Form und Art der verwendeten Prüf- und Justierhologramme richtet sich nach den konkreten Anforderungen des optischen Systems. So können Prüf-, Justier- oder Kalibrierhologramme auf beliebigen Positionen eines transmissiv oder reflektiv wirkenden CGHs angeordnet werden und in Wechselwirkung mit darauf abgestimmten optisch funktionsrelevanten Flächen, Justiermarken oder Referenznormalen treten. Denkbar sind weiterhin interferometrische Prüfanordnungen, welche mehrere einzeln gefertigte CGHs zur Prüfung der Form und Lage von optisch funktionsrelevanten Flächen zu einer einzelnen gemeinsamen Tragstruktur überprüfen. Vorteilhaft für die exakte Messung der Form- und Positionsabweichung ist jeweils die Verwendung der gleichen Justierstrukturen, nach denen der Messaufbau justiert wird.

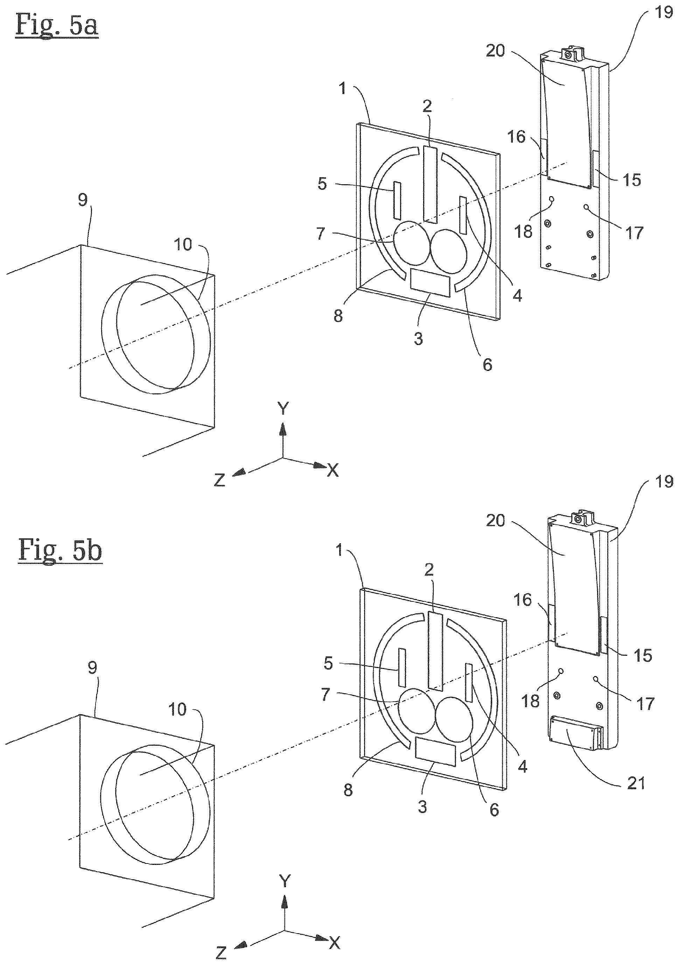

Im Folgenden sollen anhand der Figuren 5 bis 8 weitere Anwendungsbeispiele gezeigt werden, bei denen das Verfahren und die Vorrichtung zur interferometrischen Prüfung mit besonderem Vorteil anwendbar ist.

Fig. 5a zeigt eine interferometrische Prüfanordnung mit Verwendung des in Fig. 1 dargestellten CGH 1. Der Prüfling ist in diesem Fall eine mechanische Tragstruktur 19 mit einer monolithisch gefertigten Spiegelfläche als optischer Funktionsfläche 20. Wie bei den vorherigen Ausführungsbeispielen werden Justiermarken 15, 16, 17, 18 genutzt, welche wiederum durch das CGH 1 optisch durch die Justierhologramme 4, 5, 6, 7 angemessen werden können und so eine exakte Positionierung des Prüflings im interferometrischen Prüfaufbau ermöglichen. Als Messinstrument dient wiederum ein Fizeau-Interferometer 9 mit sphärischer Referenzfläche 10.

Fig. 5b zeigt den Vorteil des Verfahrens bei der Montage einer zweiten, einzeln gefertigten optischen Funktionsfläche 21, die ebenfalls eine Spiegelfläche ist, auf der gemeinsamen Tragstruktur 19. Die optische Funktionsfläche 21 wird dazu durch geeignete Aufnahmestrukturen in Relation zur ersten optischen Funktionsfläche 20 bzw. der gemeinsamen Tragstruktur 19 montiert und/oder justiert. Auch eine aktive Lagerregelung der zweiten optischen Funktionsfläche in Relation zur ersten optischen Funktionsfläche 20 ist bei Verwendung einer geeigneten Manipulationskinematik möglich. Die Montage erfolgt dann unter Nutzung von geeigneten Referenzflächen, Justierstrukturen, Abstimmmaßen etc. unter interferometrischer Prüfung gemäß dem hierin beschriebenen Verfahren. Dabei können beide optischen Funktionsflächen 20, 21 bereits durch entsprechende Fertigungsverfahren in ihre finale optische Form gebracht worden sein. Es ist aber auch möglich, einen iterativen Formgebungsprozess anhand der interferometrisch ermittelten Messdaten nach Montage und Demontage der zweiten optischen Funktionsfläche 21 durchzuführen. Durch die Kontrolle der Interferenzstreifenmuster in den Justierhologrammen 4, 5, 6, 7 kann eindeutig zwischen Form- und Lagefehler der optischen Funktionsflächen 20, 21 unterschieden werden. Die Minimierung der Form- und Lageabweichungen der beiden optischen Funktionsflächen 20, 21 erfolgt dann iterativ.

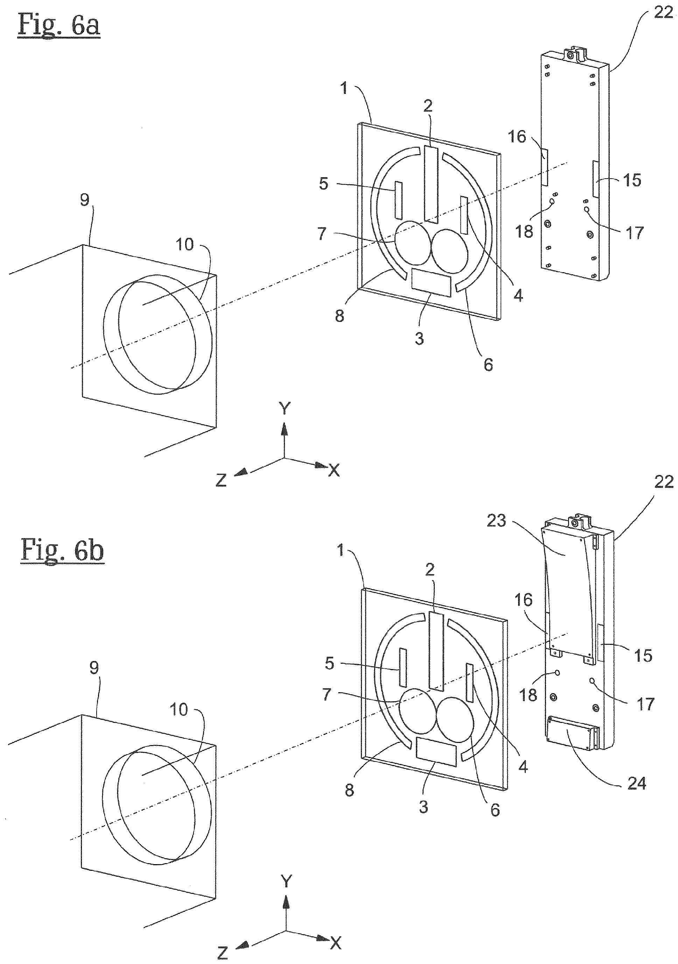

Fig. 6a und Fig. 6b zeigen ein weiteres vorteilhaftes Ausführungsbeispiel des Verfahrens, bei dem eine Montage zweier einzeln gefertigter optischer Funktionsflächen 23, 24 auf einer gemeinsamen Tragstruktur 22 unter interferometrischer Kontrolle der Form und Lage erfolgt.

Dazu zeigt Fig. 6a einen interferometrischen Prüfaufbau analog zu Fig. 3 bzw. Fig. 5a, Fig. 5b, welcher beispielhaft ein Fizeau-Interferometer 9 mit sphärischer Referenzfläche 10 nutzt. Ein CGH 1 erzeugt durch Beugung mehrere Mess-, Justier-, und ggf. Kalibrierwellenfronten, welche an die Form der optischen Funktionsflächen 23, 24 aus Fig. 6b bzw. die Form der Justiermarken 15, 16, 17, 18 angepasst sind. Wie bei den zuvor beschriebenen Ausführungsbeispielen können Justiermarken 15, 16, 17, 18 eingesetzt werden, welche zur Kontrolle der Position der Tragstruktur 22 durch die Justierhologramme 4, 5, 6, 7 angemessen werden können.

In Fig. 6b ist die Montage der zwei optischen Funktionsflächen 23, 24, die beispielsweise Spiegelflächen sind, zur gemeinsamen Tragstruktur 22 dargestellt. Die optischen Funktionsflächen 23, 24 können dabei bereits vorher durch formgebende Herstellungsprozess entsprechend ihrer Spezifikation gefertigt worden sein oder werden durch Kontrolle des Formfehlers im interferometrischen Prüfaufbau nach Fig. 6b in ihrer Form geprüft und anschließend bearbeitet. Analog zu Fig. 5b kann durch die Kontrolle der Interferenzstreifenmuster in den Justierhologrammen 4, 5, 6, 7 eindeutig zwischen Form- und Lagefehler der optischen Funktionsflächen 23, 24 unterschieden werden. Die Minimierung der Form- und Lageabweichungen der optischen Funktionsflächen 23, 24 erfolgt dann iterativ.

Die in den Figuren 1 bis 6 dargestellten Ausführungsbeispiele des Verfahrens bzw. der Vorrichtung beschreiben eine interferometrische Prüfung der Form und Lage von optisch funktionsrelevanten reflektierenden Spiegelflächen zu einer gemeinsamen Tragstruktur. Dabei wurde gezeigt, dass das Verfahren für die Prüfung der Form und Lage von zwei monolithisch verbundenen Spiegelflächen, einer monolithisch mit einer gemeinsamen Tragstruktur verbundenen Spiegelfläche und einem einzeln gefertigten Spiegelkörper, sowie für zwei einzeln gefertigte Spiegelkörper und einer gemeinsamen Tragstruktur, vorteilhaft anwendbar ist. Das Verfahren nutzt dazu mindestens ein gemeinsam genutztes diffraktives Element zur Erzeugung von geeigneten Mess-, Justier- und ggf. Kalibrierwellenfronten.

Es soll an dieser Stelle darauf hingewiesen werden, dass das interferometrische Prüfverfahren ebenfalls auf andere Prüfgeometrien und -anordnungen, verschiedene Justiermarken und verschiedenartige optische Funktionsflächen, wie z.B. optisch transmissiv wirkende Linsenelemente, anwendbar ist.

Ein vorteilhaftes Merkmal des Verfahrens ist die Verwendung mindestens eines gemeinsam genutzten vorzugsweise diffraktiven Elements und gemeinsam genutzter Justiermarken, welche sich an definierten Positionen im interferometrischen Prüfaufbau befinden, zur Prüfung von Form und/oder Lage der mindestens zwei optischen Funktionsflächen. So ist z.B. die Justierung von gefassten Linsen zu einer gemeinsamen Tragstruktur ein mögliches Anwendungsbeispiel des Verfahrens. Ebenso können mehr als zwei optische Funktionsflächen auf einer gemeinsamen Tragstruktur in Form und/oder Lage geprüft werden. Weiterhin ist ebenfalls eine aktive Lageregelung von mindestens zwei optischen Funktionsflächen im Raum möglich, wenn ein gemeinsames diffraktives Element und gemeinsam genutzte Justiermarken entsprechend verwendet werden. Weitere Anwendungen mit verschiedenartigen interferometrischen Prüfaufbauten, Justiermarken, sowie Prüfgeometrien stellen daher keine Einschränkung für die Anwendbarkeit des Verfahrens dar.

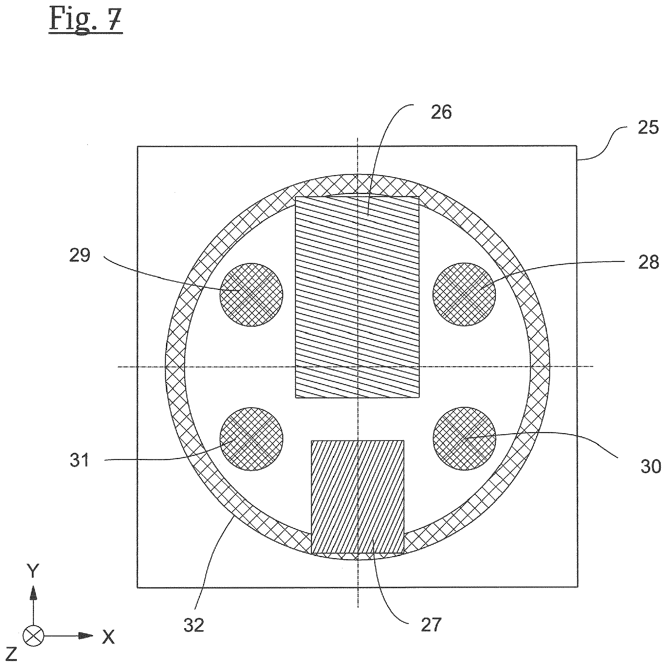

Fig. 7 zeigt ein weiteres Ausführungsbeispiel eines CGH 25, das bei dem Verfahren und der Vorrichtung verwendbar ist. Das CGH 25 wird analog zu den vorherigen Ausführungsbeispielen als diffraktives Nullelement in einem interferometrischen Prüfaufbau mit einem vorzugsweise Fizeau-Interferometer und entsprechender hochgenauer Referenzfläche betrieben. Zur Ausrichtung von CGH 25 und Prüfling im optischen Prüfaufbau besitzt das CGH 25 verschiedene Justierhologramme 28, 29, 30, 31, 32. Das Justierhologramm 32 kann als Retro-Reflektorring in einer Littrow-Anordnung genutzt werden, um das CGH 25 zum Referenzelement des Interferometers anhand des gemessenen Interferenzstreifenmusters auszurichten. Weitere Justierhologramme 28, 29, 30, 31 erzeugen beispielsweise sphärische Justierwellenfronten, welche an geeigneten Justiermarken reflektiert werden und so die Ausrichtung der Justiermarken bzw. einer Tragstruktur, welche die zu prüfenden optischen Funktionsflächen mechanisch fixiert, mit interferometrischer Genauigkeit in allen sechs Freiheitsgraden ermöglicht. Im Gegensatz zu den vorherigen Ausführungsbeispielen nutzt das hier dargestellte CGH 25 zwei Prüfhologramme 26, 27, welche neben der meist asphärisch oder freigeformten Prüfwellenfront, eine weitere vorzugsweise plane oder sphärische Kalibrierwellenfront erzeugen.

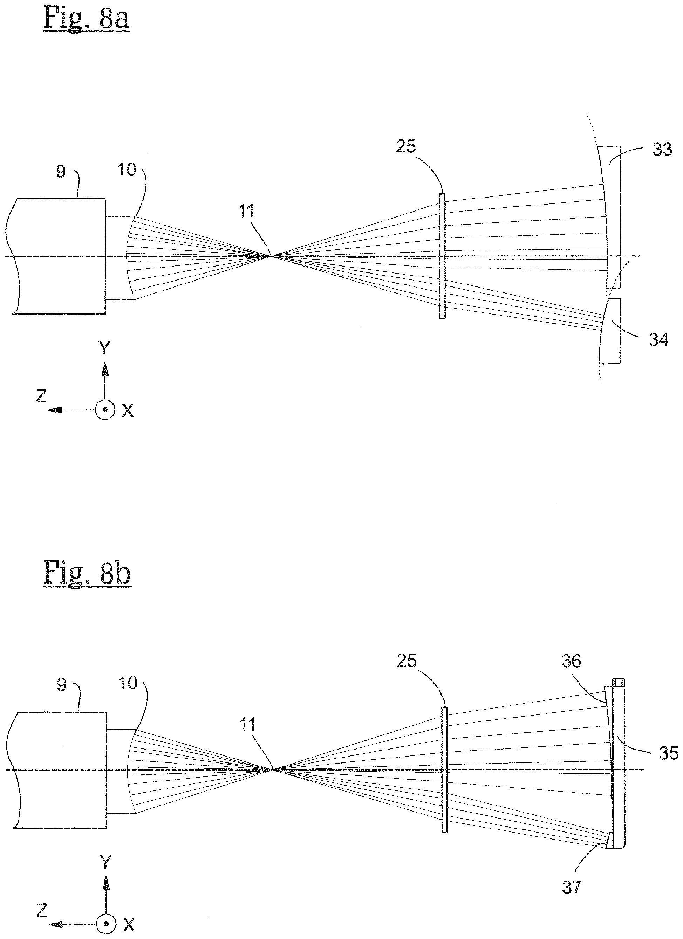

Fig. 8a und Fig. 8b zeigen ein Ausführungsbeispiel einer Vorrichtung zur interferometrischen Prüfung unter Nutzung des in Fig. 7 dargestellten CGH 25 mit Möglichkeit zur Absolutkalibrierung. Zur Vermessung des absoluten, vom CGH 25 erzeugten Wellenfrontfehlers werden zunächst zwei bekannte vorzugsweise sphärische Referenznormale 33, 34 in den optischen Prüfaufbau montiert. Die Referenznormale 33, 34 sollten sich an der Krümmung der später zu vermessenden optisch funktionsrelevanten Flächen 36, 37 orientieren und können ebenfalls Justiermarken enthalten, welche in gleicher Weise vom CGH 25 bzw. den darauf enthaltenen Justierhologrammen 28, 29, 30, 31 zur Ermittlung der Position der Normale optisch angemessen werden können. Im Allgemeinen werden entsprechend der Form der zu prüfenden optischen Funktionsflächen 36, 37 verschiedene Referenznormale 33, 34 für die Kalibrierung des Wellenfrontfehlers des CGHs 25 verwendet werden. Die Nutzung eines einzigen Referenznormals für beide zu prüfenden optischen Funktionsflächen 36, 37 stellt aber keine Einschränkung für das gezeigte Verfahren dar. Die Kalibrierung der für die Messung relevanten Bereiche des CGH 25 geschieht durch Reflexion der erzeugten Kalibrierwellenfront an den bekannten Referenznormalen 33, 34 und unter Kenntnis deren Formgenauigkeit. Die gemessenen Kalibrierwellenfronten werden dann als Kalibrierdatei hinterlegt und zur Ermittlung des Formfehlers der optischen Funktionsflächen 36, 37 herangezogen. Auf diese Weise kann eine absolute Aussage zum Beitrag des CGH 25 zum gemessenen Wellenfrontfehler getroffen werden. Bei der Prüfung von mehreren optischen Funktionsflächen sind im allgemeinen Fall mehrere Referenznormale mit unterschiedlicher Geometrie nötig.

In Fig. 8b ist die Messung der optischen Funktionsflächen 36, 37 unter Nutzung des CGH 25 und dessen vorher ermittelten Wellenfrontfehlers dargestellt. Die optischen Funktionsflächen 36, 37 weisen zum Beispiel eine asphärische oder freigeformte Geometrie auf. Andere optische Funktionsflächen, wie Planflächen oder Sphären, können aber ebenfalls unter Verwendung des CGH 25 interferometrisch geprüft werden. Beide optischen Funktionsflächen 36, 37 sind im Ausführungsbeispiel der Fig. 8b auf einer gemeinsamen Tragstruktur 35 angeordnet. Die Prüfung kann sich aber auch auf frei manipulierbare Einzelbauelemente, oder Kombinationen von monolithisch gefertigten und separat montierten Bauelementen beziehen. Nach erfolgter interferometrischer Prüfung der optischen Funktionsflächen 36, 37 wird die gespeicherte Kalibrierdatei herangezogen und mit dem Messergebnis verrechnet. So kann die Messunsicherheit bei der Formprüfung nochmals verringert werden.

## Patentansprüche

1. Verfahren zur gleichzeitigen interferometrischen Prüfung der Form und/oder Lage von mindestens zwei optischen Funktionsflächen (13, 14), durch Nutzung eines interferometrischen Prüfaufbaus umfassend
- ein Interferometer (9),
- ein strahlformendes optisches Element (1), das im Strahlengang zwischen dem Interferometer (9) und den optischen Funktionsflächen (13, 14) angeordnet ist, und
- Justiermarken (15, 16, 17, 18) welche sich auf definierten Positionen im interferometrischen Prüfaufbau oder definierten Positionen in Relation zu den optischen Funktionsflächen (13, 14) befinden,
mit den Schritten:
- Erzeugen von mehreren Justierwellenfronten durch das strahlformende optische Element (1), wobei die Justierwellenfronten an den Justiermarken (15, 16, 17, 18) und an den optischen Funktionsflächen (13, 14) transmittiert oder reflektiert werden und so Messwellenfronten erzeugt werden,
- Vermessen der Lage der optischen Funktionsflächen (13, 14) in Bezug zueinander und in Bezug zu den Justiermarken (15, 16, 17, 18) durch Auswertung der Messwellenfronten im Interferometer (9),
- Durchführen von Justierbewegungen zur Ausrichtung der optischen Funktionsflächen (13, 14) zu einer Sollposition,
- Erzeugen von mindestens zwei Prüfwellenfronten durch das strahlformende optische Element (1), wobei die Prüfwellenfronten an den optischen Funktionsflächen (13, 14) transmittiert oder reflektiert werden und so weitere Messwellenfronten erzeugt werden, und
- Bestimmung von Form- und/oder Lageabweichungen der optischen Funktionsflächen (13, 14) zu ihrer Sollgeometrie und/oder -position durch Auswertung der weiteren Messwellenfronten im Interferometer (9), wobei das strahlformende optische Element (1) mindestens zwei Prüfholgramme (2, 3) zur Erzeugung der Prüfwellenfronten und mehrere Justierhologramme (4, 5, 6, 7) zur Erzeugung der Justierwellenfronten aufweist.

2. Verfahren nach Anspruch 1,
wobei die optischen Funktionsflächen (13, 14) zumindest bereichsweise asphärisch oder als Freiformfläche ausgebildet sind.

3. Verfahren nach einem der vorhergehenden Ansprüche,
wobei das strahlformende optische Element (1) ein Transmissions- oder Reflexionsgitter, ein oder mehrere aktiv gesteuerte Elemente zur Strahlablenkung oder eine refraktive Phasenplatte umfasst.

4. Verfahren nach einem der vorhergehenden Ansprüche,
wobei das strahlformende optische Element (1) ein computergeneriertes Hologramm ist.

5. Verfahren nach einem der vorhergehenden Ansprüche,
wobei das strahlformende optische Element (1) mindestens ein Kalibrierholgramm (26, 27) zur Erzeugung von Kalibrierwellenfronten aufweist.

6. Verfahren nach einem der vorhergehenden Ansprüche,
wobei die mindestens zwei optischen Funktionsflächen (13, 14) monolithisch auf einer gemeinsamen Tragstruktur (12) angeordnet sind.

7. Verfahren nach einem der Ansprüche 1 bis 5,
wobei mindestens eine erste der mindestens zwei optischen Funktionsflächen (20) monolithisch mit einer gemeinsamen Tragstruktur (19) verbunden ist, und eine zweite, insbesondere einzeln gefertigte, optische Funktionsfläche (21) relativ zu der ersten optischen Funktionsfläche (20) justiert und auf der gemeinsamen Tragstruktur montiert wird.

8. Verfahren nach einem der Ansprüche 1 bis 5,
wobei keine der mindestens zwei optischen Funktionsflächen (23, 24) monolithisch mit einer gemeinsamen Tragstruktur(22) verbunden ist, und wobei die optischen Funktionsflächen (23, 24) relativ zueinander justiert und auf der gemeinsamen Tragstruktur (22) montiert werden.

9. Verfahren nach einem der Ansprüche 6 bis 8,
wobei die Justiermarken (15, 16, 17, 18) auf der gemeinsamen Tragstruktur (12, 19, 22) angeordnet sind.

10. Vorrichtung zur gleichzeitigen interferometrischen Prüfung der Form und/oder Lage von mindestens zwei optischen Funktionsflächen (13, 14) mit einem interferometrischen Prüfaufbau, umfassend:
- ein Interferometer (9),
- ein strahlformendes optisches Element (1), das im Strahlengang zwischen dem Interferometer (9) und den optischen Funktionsflächen (13, 14) angeordnet ist, wobei das das strahlformende optische Element (1) zur Erzeugung von mehreren Prüfwellenfronten und zur Erzeugung von mehreren Justierwellenfronten geeignet ist und mindestens zwei Prüfholgramme (2, 3) zur Erzeugung der Prüfwellenfronten und mehrere Justierhologramme (4, 5, 6, 7) zur Erzeugung der Justierwellenfronten aufweist, und
- Justiermarken (15, 16, 17, 18) welche sich auf definierten Positionen im interferometrischen Prüfaufbau oder definierten Positionen in Relation zu den optischen Funktionsflächen (13, 14) befinden.

11. Vorrichtung nach Anspruch 10,
wobei das strahlformende optische Element (1) ein Transmissions- oder Reflexionsgitter, ein oder mehrere aktiv gesteuerte Elemente zur Strahlablenkung oder eine refraktive Phasenplatte umfasst.

12. Vorrichtung nach einem der Ansprüche 10 oder 11,
wobei das strahlformende optische Element (1) ein computergeneriertes Hologramm ist.

13. Vorrichtung nach einem der Ansprüche 10 bis 12,
wobei das strahlformende optische Element (1) mindestens ein Kalibrierholgramm (26, 27) zur Erzeugung von Kalibrierwellenfronten aufweist.

## Claims

1. A method for the simultaneous interferometric examination of the form and/or position of at least two optical functional surfaces (13, 14) by use of an interferometric test set-up comprising
- an interferometer (9),
- a beam-shaping optical element (1) disposed in the radiation path between the interferometer (9) and the optical functional surfaces (13, 14), and
- alignment marks (15, 16, 17, 18) which are located at defined positions in the interferometric test set-up or defined positions in relation to the optical functional surfaces (13, 14),
having the steps:
- generating a plurality of alignment wavefronts by the beam-shaping optical element (1), the alignment wavefronts being transmitted or reflected at the alignment marks (15, 16, 17, 18) and at the optical functional surfaces (13, 14) and thus generating measuring wavefronts,
- measuring the position of the optical functional surfaces (13, 14) with respect to each other and with respect to the alignment marks (15, 16, 17, 18) by evaluating the measuring wavefronts in the interferometer (9),
- performing alignment movements for aligning the optical functional surfaces (13, 14) to a target position,
- generating at least two test wavefronts by the beam-shaping optical element (1), the test wavefronts being transmitted or reflected at the optical functional surfaces (13, 14) and thus generating further measuring wavefronts, and
- determining form and/or position deviations of the optical functional surfaces (13, 14) with respect to their target geometry and/or position by evaluating the further measuring wavefronts in the interferometer (9), the beam-shaping optical element (2) comprising at least two test holograms (2, 3) for generating the test wavefronts and a plurality of alignment holograms (4, 5, 6, 7) for generating the alignment wavefronts.

2. The method according to claim 1,
wherein the optical functional surfaces (13, 14) are formed at least partially aspherical or formed as a free-form surface.

3. The method according to any one of the preceding claims,
wherein the beam-shaping optical element (1) comprises a transmission or reflection grating, one or more actively controlled elements for beam deflection, or a refractive phase plate.

4. The method according to any one of the preceding claims,
wherein the beam-shaping optical element (1) is a computer-generated hologram.

5. The method according to any one of the preceding claims,
wherein the beam-shaping optical element (1) has at least one calibration hologram (26, 27) for generating calibration wavefronts.

6. The method according to any one of the preceding claims,
wherein the at least two optical functional surfaces (13, 14) are monolithically disposed on a common support structure (12).

7. The method according to any one of claims 1 to 5,
wherein at least a first of the at least two optical functional surfaces (20) is monolithically connected to a common support structure (19), and a second, in particular individually manufactured, optical functional surface (21) is aligned relative to the first optical functional surface (20) and is mounted on the common support structure.

8. The method according to any one of claims 1 to 5,
wherein none of the at least two optical functional surfaces (23, 24) is monolithically connected to a common support structure (22), and wherein the optical functional surfaces (23, 24) are aligned relative to each other and are mounted on the common support structure (22).

9. The method according to any one of claims 6 to 8,
wherein the alignment marks (15, 16, 17, 18) are disposed on the common support structure (12, 19, 22).

10. A device for the simultaneous interferometric examination of the form and/or position of at least two optical functional surfaces (13, 14) using an interferometric test set-up, comprising:
- an interferometer (9),
- a beam-shaping optical element (1) disposed in the beam path between the interferometer (9) and the optical functional surfaces (13, 14), the beam-shaping optical element (1) being suitable for generating a plurality of test wavefronts and for generating a plurality of alignment wavefronts and comprising at least two test holograms (2, 3) for generating the test wavefronts and a plurality of alignment alignment holograms (4, 5, 6, 7) for generating the alignment wavefronts, and
- alignment marks (15, 16, 17, 18) which are located at defined positions in the interferometric test set-up or defined positions in relation to the optical functional surfaces (13, 14).

11. The device according to claim 10,
wherein the beam-shaping optical element (1) comprises a transmission or reflection grating, one or more actively controlled elements for beam deflection, or a refractive phase plate.

12. The device according to any one of claims 10 or 11,
wherein the beam-shaping optical element (1) is a computer-generated hologram.

13. The device according to any one of claims 10 to 12,
wherein the beam-shaping optical element (1) comprises at least one calibration hologram (26, 27) for generating calibration wavefronts.

## Revendications

1. Procédé pour l'essai interférométrique simultané de la forme et/ou de la position d'au moins deux surfaces fonctionnelles optiques (13, 14) par utilisation d'un assemblage d'essai interférométrique comprenant
- un interféromètre (9),
- un élément optique (1) de mise en forme du faisceau, qui est disposé dans le trajet des rayons entre l'interféromètre (9) et les surfaces fonctionnelles optiques (13, 14), et,
- des marques de réglage (15, 16, 17, 18) qui sont situées à des positions définies dans l'assemblage d'essai interférométrique ou à des positions définies par rapport aux surfaces fonctionnelles optiques (13, 14),
avec les étapes :
- générer plusieurs fronts d'ondes de réglage par l'élément optique (1) de mise en forme du faisceau, sachant que les fronts d'ondes de réglage sont transmis ou réfléchis aux marques de réglage (15, 16, 17, 18) et aux surfaces fonctionnelles optiques (13, 14) et que des fronts d'ondes de mesure sont ainsi générés,
- mesurer la position des surfaces fonctionnelles optiques (13, 14) l'une par rapport à l'autre et par rapport aux marques de réglage (15, 16, 17, 18) par évaluation des fronts d'onde de mesure dans l'interféromètre (9),
- effectuer des mouvements de réglage pour aligner les surfaces fonctionnelles optiques (13, 14) par rapport à une position de consigne,
- générer au moins deux fronts d'ondes d'essai par l'élément optique (1) de mise en forme du faisceau, sachant que les fronts d'ondes d'essai sont transmis ou réfléchis sur les surfaces fonctionnelles optiques (13, 14) et que des fronts d'ondes de mesure supplémentaires sont ainsi générés, et
- déterminer des écarts de forme et/ou de position des surfaces fonctionnelles optiques (13, 14) par rapport à leur géométrie et/ou position de consigne par évaluation des fronts d'ondes de mesure supplémentaires dans l'interféromètre (9), sachant que l'élément optique (1) de mise en forme du faisceau a au moins deux hologrammes d'essai (2, 3) pour générer les fronts d'ondes d'essai et plusieurs hologrammes de réglage (4, 5, 6, 7) pour générer les fronts d'ondes de réglage.

2. Procédé selon la revendication 1,
dans lequel les surfaces fonctionnelles optiques (13, 14) se présentent sous une forme asphérique au moins en certaines zones ou en tant que surface de forme libre.

3. Procédé selon l'une quelconque des revendications précédentes,
dans lequel l'élément optique (1) de mise en forme du faisceau comprend une grille de transmission ou de réflexion, un ou plusieurs éléments commandés activement pour la déflexion du faisceau ou une plaque de phase réfractive.

4. Procédé selon l'une quelconque des revendications précédentes,
dans lequel l'élément optique (1) de mise en forme du faisceau est un hologramme généré par ordinateur.

5. Procédé selon l'une quelconque des revendications précédentes,
dans lequel l'élément optique (1) de mise en forme du faisceau comporte au moins un hologramme d'étalonnage (26, 27) pour générer des fronts d'ondes d'étalonnage.

6. Procédé selon l'une quelconque des revendications précédentes,
dans lequel les au moins deux surfaces fonctionnelles optiques (13, 14) sont disposées de manière monolithique sur une structure de support (12) commune.

7. Procédé selon l'une quelconque des revendications 1 à 5,
dans lequel au moins une première des au moins deux surfaces fonctionnelles optiques (20) est reliée de manière monolithique à une structure de support (19) commune et une seconde surface fonctionnelle optique (21), en particulier fabriquée individuellement, est réglée par rapport à la première surface fonctionnelle optique (20) et montée sur la structure de support commune.

8. Procédé selon l'une quelconque des revendications 1 à 5,
dans lequel aucune des au moins deux surfaces fonctionnelles optiques (23, 24) n'est reliée de manière monolithique à une structure de support (22) commune, et dans lequel les surfaces fonctionnelles optiques (23, 24) sont ajustées l'une par rapport à l'autre et sont montées sur la structure de support (22) commune.

9. Procédé selon l'une quelconque des revendications 6 à 8,
dans lequel les marques de réglage (15, 16, 17, 18) sont disposées sur la structure de support (12, 19, 22) commune.

10. Dispositif pour l'essai interférométrique simultané de la forme et/ou de la position d'au moins deux surfaces fonctionnelles optiques (13, 14) à l'aide un assemblage d'essai interférométrique, comprenant :
- un interféromètre (9),
- un élément optique (1) de mise en forme du faisceau, qui est disposé dans le trajet des rayons entre l'interféromètre (9) et les surfaces fonctionnelles optiques (13, 14), sachant que l'élément optique (1) de mise en forme du faisceau est adapté pour générer plusieurs fronts d'ondes d'essai et pour générer plusieurs fronts d'ondes de réglage et a au moins deux hologrammes d'essai (2, 3) pour générer les fronts d'ondes d'essai et plusieurs hologrammes de réglage (4, 5, 6, 7) pour générer les fronts d'ondes de réglage, et
- des marques de réglage (15, 16, 17, 18) qui sont situées à des positions définies dans l'assemblage d'essai interférométrique ou à des positions définies par rapport aux surfaces fonctionnelles optiques (13, 14).

11. Dispositif selon la revendication 10,
dans lequel l'élément optique (1) de mise en forme du faisceau comprend une grille de transmission ou de réflexion, un ou plusieurs éléments commandés activement pour la déflexion du faisceau ou une plaque de phase réfractive.

12. Dispositif selon l'une quelconque des revendications 10 ou 11,
dans lequel l'élément optique (1) de mise en forme du faisceau est un hologramme généré par ordinateur.

13. Dispositif selon l'une quelconque des revendications 10 à 12,
dans lequel l'élément optique (1) de mise en forme du faisceau a au moins un hologramme d'étalonnage (26, 27) pour générer des fronts d'ondes d'étalonnage.
